# EUROPÄISCHE PATENTSCHRIFT

(11) **EP 1 801 276 B1**
(45) Veröffentlichungstag und Bekanntmachung des Hinweises auf die Patenterteilung: **25.07.2012**
(21) Anmeldenummer: 06023601.5
(22) Anmeldetag: 14.11.2006
(51) Int. Cl.: D04B 35/02, D04B 15/14

(54) **Systemteil für ein Stricksystem**
System element of a knitting system
Elément de système de tricotage

(30) Priorität: 23.12.2005 DE 102005062177
(43) Veröffentlichungstag der Anmeldung: 27.06.2007
(73) Patentinhaber: Groz-Beckert KG, 72458 Albstadt (DE)
(72) Erfinder: Stingel, Uwe, 72469 Messstetten (DE); Fehrenbacher, Eckhard, 71149 Bondorf (DE); Sauter, Manfred, 72510 Stetten a.k.M. (DE)
(74) Vertreter: Rüger, Barthelt & Abel

(56) Entgegenhaltungen:
- DE-A1- 2 157 404
- DE-C- 73 327
- DE-C- 86 112
- DE-C- 611 413
- DE-C- 720 654
- GB-A- 723 404
- GB-A- 763 963
- US-A- 3 964 274

## Beschreibung

Die Erfindung betrifft ein Stricksystem mit einem Systemteil, wie beispielsweise eine Strickmaschinennadel, ein Auswahlteil, ein Kupplungsteil, ein Umhängeteil, ein Niederhalteteil, eine Platine oder ein ähnliches Teil für die Maschenbildung. Insbesondere betrifft die Erfindung ein Stricksystem mit einem Systemteil, das durch Relativbewegung zu einem Strickschloss kontrolliert bewegt wird. Ein Strickschloss weist dazu eine Kurvenbahn auf, auf der ein von dem Systemteil weg ragender, als Fuß bezeichneter Fortsatz gleitet, um das Systemteil entsprechend der Form der Kurvenbahn in einer Führung zu bewegen. Insbesondere betrifft die Erfindung ein Stricksystem mit einem systemteil, bei dem sich das Strickschloss und das Bett, das das Systemteil aufnimmt, vorwiegend oder ausschließlich in einer Richtung gegen einander bewegen, wie es bei Rundstrickmaschinen meist und vorwiegend der Fall ist.

Während des Betriebs einer Rundstrickmaschine gleitet der Fuß an der Kurvenbahn des Nadelschlosses, wobei er in Abhängigkeit von Einflussfaktoren, wie Schmierung, Verschmutzung, Betriebsdauer, Maschinendrehzahl, Fadenspannung usw. allmählich verschleißt. Dies betrifft insbesondere die beiden quer zum Systemteil und zur Bewegungsrichtung desselben ausgerichteten Kanten des Fußes, die unmittelbar mit der Kurvenbahn des Schlosses in Berührung stehen. Insbesondere die dem Haken zugewandte Kante unterliegt einem verschleißbedingten Materialabtrag, der zu einer Änderung der wirksamen Arbeitslänge der Nadel und damit zu Problemen im Maschenbild führen kann.

Es sind bereits verschiedene Maßnahmen versucht worden, um den Fußverschleiß zu mindern.

Die DE 21 57 404 A1 offenbart eine Strickmaschinennadel, deren länglicher Körper zwei Flachseiten und zwei Schmalseiten aufweist. Der Körper der Stricknadel ist in Gebrauch in einem Führungskanal eines Nadelbetts aufgenommen, wobei die zwischen beiden Flachseiten des Körpers zu messende Dicke wesentlich geringer ist als die Nutbreite des Führungskanals. Die Strickmaschinennadel ist mit einem von ihrer Schmalseite weg stehenden Fuß versehen und entlang ihrer Längsrichtung verwunden. Die Verwindungsrichtung ist dabei so gewählt, dass der Fuß schräg gegen die Bewegungsrichtung geneigt ist. Der zwischen dem Fuß und dem Arbeitsteil der Strickmaschinennadel vorhandene Abschnitt des Körpers oder Schafts bildet eine Torsionsfeder. Diese fängt auf den Fuß einwirkende Stöße ab, indem der Fuß eine federnde Schwenkbewegung ausführen kann.

Diese Lösung setzt ein großes seitliches Spiel zwischen dem in dem Nadelbett definierten Führungskanal und der Strickmaschinennadel voraus. Die Breite des Führungskanals muss als gegeben angesehen werden. Deshalb führt dieser Vorschlag zu sehr dünnen Nadeln und entsprechend auch zu sehr dünnen Füßen, was die erhoffte Verschleißminderung als fraglich erscheinen lässt.

Die DE 611 413 C offenbart Stricknadeln, die für Nadelzylinder mit Nadelkanälen vorgesehen sind, die nicht radial orientiert sind. Vielmehr sind die Nadelkanäle tangential zu einem gedachten Zylinder angeordnet, der konzentrisch zu der Drehachse des Nadelzylinders orientiert ist. Durch diese Maßnahme wird das sichere Erfassen eines Fadens durch die Nadel verbessert. Der an der Nadel vorgesehene Fuß kann gegen die Nadle schräg gestellt sein. Mit dieser Maßnahme wird die Schrägstellung des Nadelkanals kompensiert.

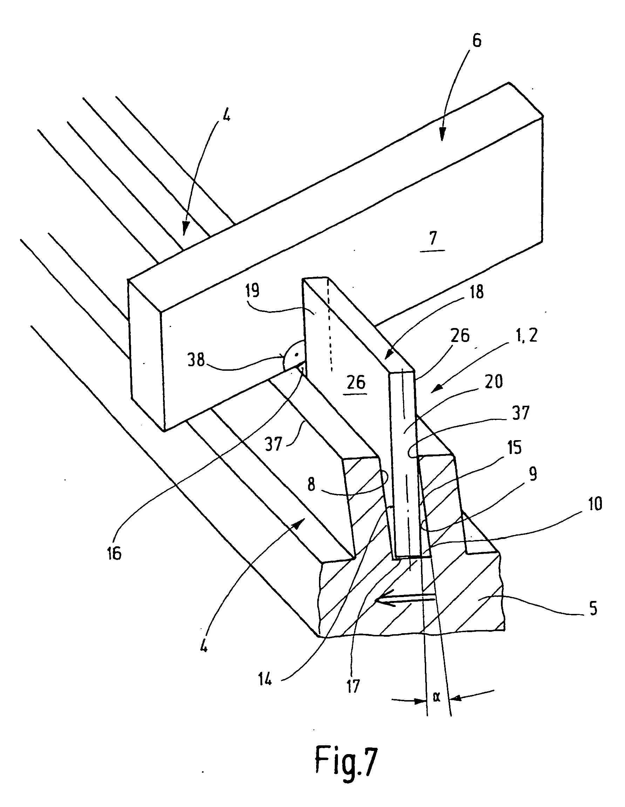

Aus der GB 763963 ist darüber hinaus eine Rundstrickmaschine mit einem Zylinder bekannt, dessen Nadelkanäle nicht exakt radial sondern statt dessen gegen die Radiale geneigt angeordnet sind. Mit dieser Maßnahme wird erreicht, dass die in den Nadelkanälen leicht kippenden Strickwerkzeuge ihrerseits exakt radial orientiert sind. Eine solche Ausführungsform des Stands der Technik zeigt Figur 7.

Die DE 21 10 916 A1 offenbart Strickmaschinennadeln, deren Fuß trägt ein äußeres Teil, das mit dem Fuß verschweißt oder an diesen angeklebt oder angelötet sein kann. Das äußere Teil vermittelt den Kontakt zu dem Strickschloss und steht mit diesem in Berührung. Der Verschleiß beschränkt sich somit auf das äußere Teil, dessen Gleitflächen wesentlich größer sein können als die Kanten des Fußes.

Auf den Fuß aufgesetzte Teile stellen jedoch, wenn sie sich von dem Fuß lösen, eine Gefahrenquelle dar. Außerdem erhöhen sie die Masse des Strickwerkzeugs.

Die gleiche Druckschrift offenbart außerdem in ihren Figuren 15 bis 17 Füße, die einen abgewinkelten oder umgebogenen Abschnitt aufweisen. Dieser Abschnitt ragt von dem Fuß nach Art einer frei stehenden Zunge weg und ist um eine Linie gebogen, die quer zur Längsrichtung der Nadel gerichtet ist.

Derartige Nadeln haben sich in der Praxis nicht durchgesetzt.

Aus der DE 29 11 195 B1 ist eine Strickmaschinennadel mit geprägtem Fuß bekannt. Parallel zu den beiden quer zur Nadel stehenden und dem Antrieb derselben dienenden Kanten sind Vertiefungen in den Fuß eingeprägt, die bei der Herstellung dazu dienen, Material zu verdrängen, um die anschließenden Kanten zu glätten. Diese Vertiefungen im Fuß haben in sehr vielen Anwendungsfällen als Bruchstellen gewirkt. Eine Verbesserung der Strickmaschinenadel insgesamt konnte deshalb nur bedingt erzielt werden.

Davon ausgehend ist es Aufgabe der Erfindung, ein Stricksystem und eine Strick- oder Wirkmaschine mit reduzierten Fußverschleiß zu schaffen.

Diese Aufgabe wird mit dem Systemteil nach Anspruch 1 sowie mit einer Strick- oder Wirkmaschine nach Anspruch 17 gelöst:

Das erfindungsgemäße Systemteil weist einen Fuß auf, der zum Antrieb durch ein Schloss eingerichtet ist. Der Fuß weist dazu zumindest eine, vorzugsweise zwei sich von dem Körper des Systemteils weg erstreckende Kanten auf, die mit zumindest einer der Seitenflächen einen stumpfen Winkel einschließen. Unter "Kante" wird diejenige schmale Fläche des Fußes verstanden, die in oder gegen die Bewegungsrichtung des Systemteils in seinem Führungskanal schaut. Durch die Neigung dieser Kante gegen eine von der Seitenfläche des Systemteils vorgegebene Ebene kann erreicht werden, dass die Kante des Fußes über einen großen Teil ihrer Länge oder im Idealfall über ihre gesamte Länge in linien- oder streifenförmiger Anlage zu der Kurvenfläche des Strickschlosses steht. Insbesondere wird eine punktförmige Berührung, die, wie es sich herausgestellt hat, im Stand der Technik auftreten kann, konsequent vermieden. In Folge dessen, werden die bei sonst vorhandenen punktförmigen Belastungen auftretenden übermäßigen Materialverschleiße vermieden. Die Belastung der Kante des Fußes wird vergleichmäßigt und das Reißen oder Durchbrechen von Schmierfilmen, die zwischen Fuß und Führungsbahn wirksam sind, wird unterbunden.

Die Neigung des Fußes gegen die Seitenfläche des Strickwerkzeugs ermöglicht die funktionsgerechte Ausrichtung des Fußes und die Beibehaltung derselben, insbesondere auch dann, wenn das Strickwerkzeug in Folge einseitiger typischerweise bei Rundstrickmaschinen auftretender Belastung in dem Führungskanal eine Neigung erfährt, d.h. wenn seine Seitenflächen nicht exakt parallel zu den Flanken des Führungskanals orientiert sind. Der stumpfe Winkel zwischen dem Fuß und der Seitenfläche des Systemteils ist vorzugsweise so groß bemessen, dass sie der Neigung oder Schrägstellung des Systemteils in dem Führungskanal entspricht und diese vorzugsweise gerade kompensiert. Dadurch ragt der Nadelfuß während des Betriebs der Strickmaschine senkrecht aus dem Nadelkanal heraus und es wird der gewünschte linienförmige Kontakt zwischen der Führungsbahn des Strickschlosses und Nadelfuß hergestellt.

Das erfindungsgemäße Systemteil weist einen Fuß zum Antrieb desselben durch ein Schloss auf, wobei der Fuß an seinen Schmalseiten zusätzlich zu den Merkmalen des Anspruchs 1 zumindest eine sich von der Schmalseite des Körpers des Systemteils weg erstreckende rippenartige Verdickung aufweisen kann. Diese kann nach Art einer Wulst ausgebildet sein. Durch die Verdickung wird die Kontaktfläche zwischen dem Fuß und der Führungsbahn des Nadelschlosses erhöht. Beginnendem Verschleiß wird sehr viel schneller Einhalt geboten als es bei Füßen ohne Verdickung der Fall ist. Selbst wenn ein anfänglicher Kontakt zwischen der Laufbahn des Schlosses und der Kante des Fußes zunächst lediglich an einem Punkt oder einer lokalen Stelle stattfindet, ist ein hier stattfindender Materialabtrag dazu geeignet, die Größe der Berührungsfläche anwachsen zu lassen, so dass sich eine Berührungslinie oder ein Berührungsstreifen ausbildet. Der Verschleiß wird dann reduziert. Dieser Effekt erhöht die Verschleißfestigkeit schon bei Nadeln mit ungekröpftem, d.h. sich in einer Ebene mit den Seitenflächen erstreckenden Fuß. Wenn der Fuß hingegen gegen diese Ebene etwas geneigt ist, kann zusätzlich die Schrägstellung des Systemteils in dem Führungskanal kompensiert werden, so dass der Fuß rechtwinklig zu der Relativbewegungsrichtung steht und linienhaft an der Führungsbahn des Schlosses anliegt.

Die Verdickung ist vorzugsweise in einem plastischen Umformvorgang ausgebildet. Sie kann eine an einer oder an beiden Flachseiten des Fußes vorstehende Wulst sein, die die Seitenflächen des Systemteils seitlich überragt. Dies führt neben einer Verbesserung der Verschleißfestigkeit zu einer Aussteifung des Fußes.

Neben der Verdickung kann eine Vertiefung ausgebildet sein. Diese ermöglicht bei ihrer Herstellung durch Materialverdrängung eine Vergrößerung der zu erzeugenden Verdickung.

Vorzugsweise ist der Körper des Systemteils unverwunden. Seine Seitenflächen liegen somit im Ganzen an den Flanken des Führungskanals an. Eine Tordierung oder sonstige federnde Verwindung des Körpers wird vorzugsweise nicht zugelassen. Dadurch wird die dauerhafte präzise rechtwinklige Ausrichtung des Fußes sichergestellt.

Alternativ oder ergänzend kann die erfindungsgemäße Kompensation der sich im Stand der Technik im Betrieb ergebenden Schrägstellung des Fußes des Systemteils, die nach Anspruch 1 durch Gestaltung des Systemteils kompensiert worden ist, auch durch Maßnahmen an der Strickmaschine bewirkt werden. Dazu können die Führungskanäle des Betts so geneigt angeordnet werden, dass die in ihnen schräg liegenden Systemteile mit ihren Füßen in Betrieb (d.h. in Vorwärtsdrehrichtung) gerade wieder parallel zu der Querrichtung der Führungsbahnen des Schlossmantels ausgerichtet sind und somit linienhaft an der Schlossbahn anliegen. Zusätzlich oder alternativ kann auch die Führungsbahn mit einer seitlichen Schräglage (Neigung in Querrichtung) versehen sein. Eine Verbesserung gegen den Stand der Technik ist schon zu erreichen, indem die genannte, die Führungsbahn betreffende Maßnahme auf Bereiche derselben beschränkt wird.

Weitere Einzelheiten vorteilhafter Ausführungsformen der Erfindung sind Gegenstand von Ansprüchen, der Zeichnung und/oder Beschreibung.

In der Zeichnung sind Ausführungsbeispiele der Erfindung veranschaulicht. Es zeigen:
- Figur 1: eine zu einem Stricksystem gehörende Maschinen- stricknadel in schematisierter perspektivischer Darstellung,
- Figur 2: die Maschinenstricknadel nach Figur 1 in einem Na- delbett in Verbindung mit einem Schloss in schema- tisierter Schnittdarstellung,
- Figur 3: die Nadel, das Bett und das Schloss nach Figur 2 in schematisierter ausschnittsweiser perspektivischer Darstellung,
- Figur 4: eine abgewandelte Ausführungsform der Maschinen- stricknadel nach Figur 1 und 2 in schematisierter Perspektivdarstellung,
- Figur 5: eine weitere abgewandelte Ausführungsform der Ma- schinenstricknadel in Draufsicht auf ihren Fuß,
- Figur 6: eine weitere Ausführungsform der Maschinenstrickna- del in einer schematisierten Draufsicht auf ihren Fuß und
- Figur 7: einen Strickzylinder mit Strickwerkzeugen nach dem Stand der Technik in schematisierter ausschnitts- weiser perspektivischer Darstellung.

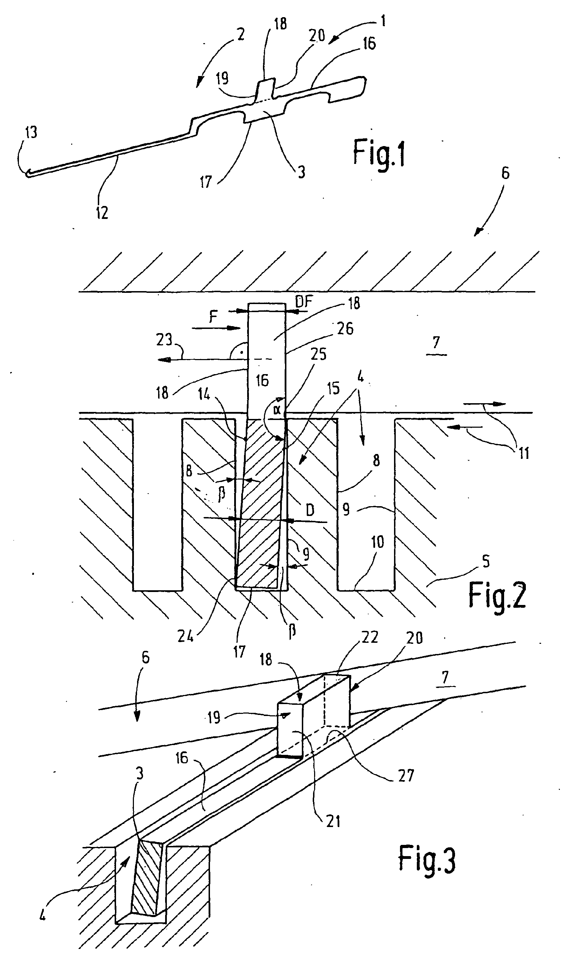

In Figur 1 ist ein Systemteil 1 in Form einer Maschinenstricknadel 2 für ein nicht weiter veranschaulichtes Stricksystem einer Strickmaschine dargestellt. Die Maschinenstricknadel 2 dient dabei lediglich zur Veranschaulichung wesentlicher Elemente der Erfindung, die ebensogut an anderen beweglichen Teilen des Stricksystems, wie beispielsweise Platinen, Kupplungsteilen, Auswahlteilen, Umhängeteilen oder ähnlichen Komponenten eines Stricksystems verwirklicht sein können. Das Systemteil 1 weist einen Körper 3 auf, der als flacher länglicher Körper ausgebildet und, wie Figur 2 zeigt, in Gebrauch in einem als Nadelkanal bezeichneten Führungskanal 4 eines Betts 5 angeordnet ist. Das Bett 5 ist beispielsweise eine Rippscheibe oder ein Strickzylinder einer Rundstrickmaschine. In beiden Fällen weist es eine große Anzahl neben einander angeordneter Führungskanäle 4 auf, die im Fall des Strickzylinders an dessen Umfang in Axialrichtung parallel zueinander angeordnet sind. Im Fall der Rippscheibe sind sie radial angeordnet. Dem Bett 5 bzw. Strickzylinder ist ein Schloss 6 zugeordnet, das eine Führungsbahn 7 zur Bewegung der Systemteile 1 bzw. Maschinenstricknadeln 2 aufweist. Diese werden dabei in dem jeweiligen Führungskanal 4 in Kanallängsrichtung bewegt, die in Figur 2 senkrecht zur Zeichenebene orientiert ist. Die Führungskanäle 4 weisen einen vorzugsweise rechteckigen Querschnitt auf, wobei sie jeweils von zueinander parallelen ebenen Flanken 8, 9 begrenzt wird, die zwischen einander einen Boden 10 einschließen. Jeder der Führungskanäle 4 ist mit einem Systemteil versehen, das zur Maschenbildung beiträgt. Diese erfolgt unter Relativbewegung des Betts 5 und des Schlosses 6 gegen einander. Die Relativbewegung ist in Figur 2 durch ein Pfeilpaar 11 veranschaulicht und kommt beispielsweise durch eine Drehung des als Strickzylinder ausgebildeten Betts 5 in Bezug auf das dann ruhende Schloss 6 zustande. Die Führungsbahn 7 ist in einer senkrecht zu dem Boden 10 zu messenden Richtung gerade ausgebildet. Diese Richtung ist bei einer Rundstrickmaschine die Radialrichtung. In Umfangsrichtung, die in Figur 2 durch einen der Pfeile des Pfeilpaars 11 bezeichnet ist, weist die Führungsbahn 7 ein Profil, d.h. eine Krümmung auf, die die Bewegung des Systemteils 1 bzw. der Maschinenstricknadel 2 bestimmt.

An dem Körper 3 der Maschinenstricknadel 2 ist, wie aus Figur 1 ersichtlich ist, ein Schaft 12 angeordnet, der sich in Nadelbewegungsrichtung oder Nadellängsrichtung erstreckt und an seinem Ende, dem maschenbildenden Bereich einen Haken 13 trägt. Diesem können nicht veranschaulichte Schließmittel, wie Zungen, Schieber oder dergleichen, zugeordnet sein. Der Körper 3 ist, wie erwähnt, flach und weist zwei vorzugsweise ebene Seitenflächen 14, 15 auf. Der Abstand zwischen beiden Seitenflächen markiert die Dicke D des Körpers 3. Die Dicke D ist dabei vorzugsweise etwas geringer als der Abstand der Flanken 8, 9 voneinander, so dass der Körper 3 mit einem nicht zu großen Spiel in dem Führungskanal 4 verschiebbar gelagert ist. Der Körper 3 weist außerdem Schmalseiten 16, 17 auf, die die Seitenflächen 14, 15 miteinander verbinden und die Nadeloberseite bzw. den Nadelrücken bilden. Die Breite der Schmalseiten 16, 17 stimmt mit der Dicke D überein und ist wesentlich geringer als die rechtwinklig dazu zu messende Höhe der Seitenflächen 14, 15. Die Höhe des Körpers 3 ist vorzugsweise so bemessen, dass dieser ganz in den Führungskanal 4 passt, wie Figur 2 veranschaulicht. Die Schmalseite 16 liegt somit außerhalb des Schlosses 6.

Von der Schmalseite 16 erstreckt sich ein Fuß 18 weg, der in das Schloss 6 ragt und an der Führungsbahn 7 anliegt. Der Fuß 18 ist in Seitenansicht ungefähr rechteckig. Seine vordere, dem Haken 13 zugewandte und seine hintere, dem Haken 13 abgewandte Kante 19, 20 stehen mit den Führungsbahnen des Schlosses 6 in Eingriff. In Figur 3 ist dies für die Führungsbahn 7 und die Kante 20 veranschaulicht. Der gegenüber liegenden Kante 19 ist ebenfalls eine Führungsbahn zugeordnet, die in Figur 3 jedoch nicht veranschaulicht ist.

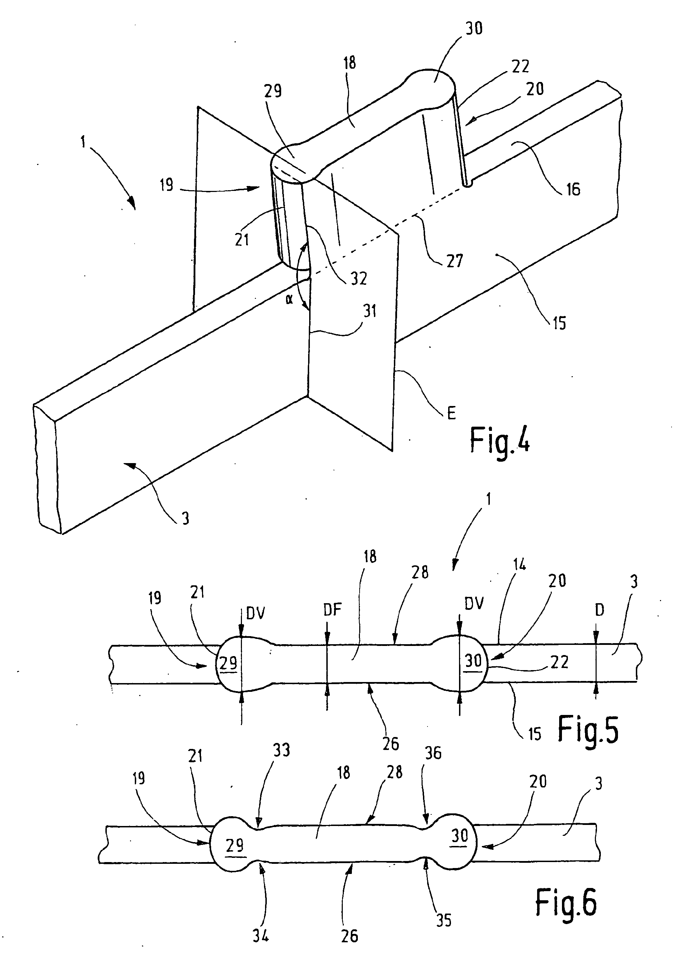

Die Kanten 19, 20 sind rechtwinklig zu der Schmalseite 16 orientiert, sie können durch ebene oder gewölbte Anlageflächen 21, 22 gebildet sein, die z.B. aus Figur 4 hervorgehen.

Der das Bett 5 bildende Strickzylinder bewegt sich bei Betrieb einer Rundstrickmaschine vorwiegend oder ausschließlich in einer gegebenen Richtung, die in Figur 2 beispielshalber von dem unteren Pfeil des Pfeilpaars 11 bezeichnet wird. Relativ zu der Führungsbahn 7 bewegt sich der Fuß 18 somit in Richtung des Pfeils 23. Der Fuß 18 gleitet dabei auf der Führungsbahn 7. Die entstehende Gleitreibungskraft F wirkt entgegen der Relativbewegungsrichtung auf den Fuß 18 ein und kann, wie dargestellt, ein Schrägstellen des Körpers 3 in der Führungsbahn 4 bewirken. Die Schrägstellung bedeutet, dass die bezüglich der Relativbewegung vorn liegende Seitenfläche 14 mit ihrer unteren Kante 24, die an die Schmalseite 17 grenzt, an der Flanke 8 anliegt. Hingegen liegt die bezüglich der Relativbewegungsrichtung hinten liegende Seitenfläche 15 mit ihrer oberen, an die Schmalseite 16 grenzenden Kante 25 an der Flanke 9 an. Die Schrägstellung des Körpers 3 zur Radialrichtung des Strickzylinders kann Bruchteile eines Grads bis zu wenigen Grad betragen.

Der Fuß 18 des Systemteils 1 ist gegen den Körper 3 mit einem Winkel α geneigt, um die Schrägstellung des Körpers 3 in dem Führungskanal 4 auszugleichen. Der Winkel α ist zwischen der Seitenfläche 15 und einer Seitenfläche 26 des Fußes 18 zu messen. Sein Scheitel liegt auf einer Biegelinie 27, die in Figur 3 gestrichelt angedeutet ist und in Figur 2 senkrecht auf der Zeichenebene steht. Die Biegelinie 27 ist im Wesentlichen parallel zu der Längsrichtung des Führungskanals 4 bzw. der Längsrichtung des Systemteils 1 orientiert, die mit seiner Bewegungsrichtung innerhalb des Führungskanals 4 übereinstimmt. Die Biegelinie 27 ist außerdem parallel zu der Schmalseite 16 orientiert.

Ebenso ist die der Seitenfläche 26 gegenüber liegende Seitenfläche 28 des Fußes 18 gegen die angrenzende Seitenfläche 14 in einem gleichen Winkel geneigt. Dieser Winkel α ist so bemessen, dass die Seitenfläche 26 bzw. 28 in einem rechten Winkel zu der durch den Pfeil 23 vorgegebenen Relativbewegungsrichtung orientiert ist. Diese Maßnahme bewirkt, dass die Kante 20 bzw. Anlagefläche 22 in einem linien- oder streifenförmigen Bereich mit der Führungsbahn 7 in Anlage steht. Insbesondere werden punktuelle Anlagen vermieden, zu denen es kommt, wenn der Körper 3, wie in Figur 2 oder 3 veranschaulicht, in dem Führungskanal 4 etwas kippt und der Fuß 18 in Fluchtung mit den Seitenflächen des Körpers 3 ausgerichtet ist. Die Vermeidung einer punktuellen Berührung zwischen der Führungsbahn 7 und der Anlagefläche 22 führt zu einer Belastungsverteilung und Verschleißminderung sowohl an der Führungsbahn 7 als auch und insbesondere an dem Fuß 18.

Die Seitenflächen 26, 28 können, wie vorstehend dargestellt, als ebene Flächen ausgebildet sein, so dass die Dicke DF des Fußes 18 die in Richtung des Pfeils 23 zwischen den beiden Seitenflächen 26, 28 zu messen ist, an keiner Stelle größer ist als die Dicke D des Körpers 3. Es ist jedoch auch möglich, den Fuß 18 insbesondere im Bereich seiner beiden Kanten 19, 20 mit einer Verdickung 29, 30 zu versehen, die in Figur 4 und 5 dargestellt ist. Die Verdickungen 29, 30 erstrecken sich entlang der Kanten 19, 20 und zeichnen sich dadurch aus, dass der Fuß 18 im Bereich der Verdickungen 29, 30 eine Dicke DV aufweist, die größer ist als die Dicke D des Körpers 3. Vorzugsweise ist die Dicke DV auch größer als die Dicke DF des Fußes 18. Seine beiden Seitenflächen 26, 28 sind somit nur außerhalb der Verdickungen 29, 30 eben und parallel zueinander orientiert. Die Verdickungen 29, 30 kann sowohl symmetrisch als auch asymmetrisch ausgebildet sein. Im unsymmetrischen Fall überragen sie beispielsweise lediglich eine der beiden Seitenflächen 14, 15. Im bevorzugten und in Figur 5 dargestellten Falle überragen sie beide Seitenflächen 14, 15.

Das mit dem insoweit beschriebenen Fuß 18 versehene Systemteil 1 kann, gemäß Figur 5, flach ausgebildet sein, so dass die Seitenfläche 28 in einer gemeinsamen Ebene mit der Seitenfläche 14 und die Seitenfläche 26 in einer gemeinsamen Ebene mit der Seitenfläche 15 angeordnet ist. Alternativ kann der Fuß 18 eine größere Dicke DF aufweisen als der Körper 3 mit seiner Dicke D. In diesem Fall sind die Seitenflächen 26, 28 parallel zu den Seitenflächen 14, 15 orientiert.

In dem insoweit beschriebenen Fall nimmt der Fuß 18, wenn der Körper 3 in dem Führungskanal 4 etwas kippt, eine Schrägstellung ein, die zunächst zu einer lediglich bereichsweisen, eher punktuellen Berührung zwischen der Führungsbahn 7 und dem Fuß 18 bzw. der entsprechenden Anlagefläche 22 führt. Dies führt zu einem lokalen Verschleiß derselben, so dass sich die Anlagefläche 22 etwas deformiert und die Berührungszone alsbald über die gesamte rechtwinklig zu der Schmalseite 16 erstreckenden Länge des Fußes 18 führt. Der Verschleiß kommt dann im Wesentlichen zum Stillstand und die Funktion des Systemteils 1 ist gesichert.

In einer bevorzugten Ausführungsform ist jedoch der mit den Verdickungen 29, 30 versehene Fuß 18 gegen den Körper 3 geneigt, wie insbesondere Figur 4 erkennen lässt. Die Biegelinie 27 ist, wie vorstehend beschrieben, in Längsrichtung und ungefähr parallel zu der Schmalseite 16 orientiert. Eine gedachte Schnittebene E, die den Körper 3 im Bereich des Fußes 18, insbesondere im Bereich seiner Kante 19 oder 20, quer durchschneidet und deren Flächennormale mit der Längsrichtung des Körpers 3 und somit mit der Bewegungsrichtung des Systemteils 1 in dem Führungskanal 4 übereinstimmt, schneidet die Seitenfläche 15 und die Anlagefläche 21 an Schnittlinien 31, 32, die mit einander den bereits oben erläuterten Winkel α einschließen. Der Winkel α ist ein stumpfer Winkel, der vorzugsweise nahe bei 180° liegt. Genau genommen, beträgt er vorzugsweise 180° -β. Dabei ist β ein spitzer Winkel, den die Seitenfläche 15 mit der Flanke 9 bzw. die Seitenfläche 14 mit der Flanke 8 einschließt. Der Winkel β hängt von der Breite des Führungskanals 4 und der Dicke D des Körpers 3, sowie von der Höhe des Kanals ab. Des Weiteren können Einflussfaktoren, wie Viskosität des Schmierstoffs, Arbeitsgeschwindigkeit der Strickmaschine usw. Einfluss haben, die bei der Bemessung von α zu berücksichtigen sein können.

Grundsätzlich kann der erfindungsgemäße Gedanke auch in der Weise verwirklicht werden, dass der Neigungswinkel α nicht an dem Strickwerkzeug 1, sondern im Bereich wenigstens einer Flanke 8, 9 des Führungskanals 4 vorgesehen ist. Da beispielsweise bei einer Rundstrickmaschine die Nadeln 2 mit ihrem Körper 3 zufolge der Drehbewegung des Nadelzylinders bzw. der Rippscheibe gegen die Flanken 8, 9 eines Führungskanals 4 gedrückt gehalten sind, genügt es in der Regel, nur eine dieser Flanken 8, 9 im Winkel α geneigt anzuordnen.Abhängig von der Art der Strickmaschine bzw. der Herstellung des Führungskanals 4 können aber beide Flanken 8, 9 eines Führungskanals 4 winklig angeordnet sein.

Ein Beispiel für die Ausbildung eines erfindungsgemäßen Strickwerkzeugträgers ist in Figur 7 im Ausschnitt schematisch dargestellt, wobei dieser die gleiche Funktion in Bezug auf die Maschenbildung wie der Strickwerkzeugträger der dem Bett 5 der Figur 2 entspricht, erfüllt. Der durch die Flanken 8, 9 seitlich begrenzte Führungskanal enthält eine Maschinenstricknadel 1, die ähnlich der Nadel nach Figur 1 ausgebildet sein kann und nur schematisch dargestellt ist. Sie weist einen Körper 3 auf, der von Schmalseiten 16, 17 in seiner Höhe und von Seitenflächen 14, 15 in seiner Breite begrenzt ist. Von seiner Schmalseite 16 erstreckt sich ein Fuß 18 weg, der in das Schloss 6 ragt und an der Führungsbahn 7 anliegt. Entgegen der vorangegangenen Beschreibung handelt es sich bei dieser Maschinenstricknadel 2 um eine herkömmliche Nadel 2 deren Fuß 18 bzw. dessen Kanten 19, 20 nicht in einem Winkel α zu den Seitenflächen 14, 15 angeordnet ist (α=180°). Die Seitenflächen 14, 15 der Maschinenstricknadel 2 sind in einer Ebene mit den Seitenflächen 26, 28 des Fußes 18 angeordnet. Die linien- bzw. flächenhafte Berührung der Kante 19, 20 mit der Führungsbahn 7 des Schlosses 6 wird dadurch erreicht, dass der Führungskanal 4 insbesondere seine Flanken 8, 9 im Winkel α zu der Führungsbahn 7 angeordnet ist. Im Betrieb wird das Systemteil 1 von der Führungsbahn 7 des Strickmaschinenschlosses erfasst wobei es zur linien- bzw. flächenhaften Anlage zwischen den Kanten 19, 20 der Nadel 2 und der Schlossbahn 7 kommt. Dies ist aufgrund der winkligen Anordnung des Führungskanals 4 möglich, insbesondere aufgrund der in Figur 7 in Laufrichtung des Betts 5 geneigten Flanke 9. Dabei ist die Flanke 9 um den Winkel α in Laufrichtung geneigt. Somit stützt die Kante 37, welche an der Seite der Flanke 9 angeordnet ist, die vom Boden 10 entfernt liegt, die Nadel 2 zwischen dem Übergang zwischen Körper 3 und Fuß 18 ab und hält sie senkrecht in Bezug auf die Führungsbahn 7. Die Kante 19, 20 des Fußes 18 der Nadel 2 ist parallel zu einer gedachten Ebene (nicht gezeichnet) der Führungsbahn 7 des Schlosses 6. Diese Ausrichtung der Nadel 2 zu der Führungsbahn 7 ist in Figur 7 an der Stelle 38 angedeutet. Diese winklige Anordnung der Flanke 9, 8 erlaubt die Kompensation des Spiels, welches zwischen Maschinenstricknadel 2 und Führungskanal 4 besteht. Somit ist es möglich, den erfinderischen Gedanken, die linien- bzw. flächenhafte Anlage eines Fußes 18 an der Führungsbahn 7 eines Schlosses 6 zu bewirken, mit winklig angeordneten Führungskanälen in einer Strickmaschine zu verwirklichen.

Wie Figur 7 zeigt, ist es auch möglich, die Führungsbahn 7 des Strickmaschinenschlosses 6 geneigt anzuordnen (nicht gezeichnet), sodass die Kante 19, 20 des Fußes 18 eines Systemteils 1 parallel zu der Führungsbahn 7 steht, obwohl der Führungskanal 4 bzw. dessen Flanke 8, 9 keine Neigung aufweist und obwohl im Führungskanal 4 ein Systemteil 1 nach dem Stand der Technik ohne erfindungsgemäße Neigung an der Biegelinie 27 angeordnet ist. Um die Parallelität zwischen der geneigten Führungsbahn 7 und der Kante 19, 20 des Systemteils 1 zu gewährleisten, ist es erforderlich, dass der Neigungswinkel der Führungsbahn 7 des Schlosses 6 in Bezug auf den Schlosswinkel und dessen Steigung innerhalb der Schlosskurve variiert und angepasst wird. Schon durch eine bereichsweise Neigung der Führungsbahn 7 tritt eine Minderung des Verschleißes an dem Systemteil 1 bzw. an dem Antriebsmittel, dem Fuß 18 des Systemteils 1 ein.

Die Verdickungen 29, 30 sind vorzugsweise in einem plastischen Umformvorgang an dem Fuß 18 ausgebildet worden, was daran erkennbar ist, dass sie aus dem gleichen Material wie der Körper 3 und der Fuß 18 bestehen. Des Weiteren sind vorzugsweise keinerlei Nähte, insbesondere weder Löt- noch Schweißnähte, zwischen dem Körper 3, dem Fuß 18 und den Verdickungen 29, 30 vorhanden. Im Schliffbild ist der nahtlose Faserverlauf des Materials (vorzugsweise Stahl) zu erkennen. Der plastische Umformvorgang kann dabei so gestaltet werden, dass die Dicke DF mit der Dicke D übereinstimmt. Alternativ kann die Dicke DF auch kleiner als die Dicke D sein, um eine Materialverdrängung zur Auffüllung der Verdickungen 29, 30 in einem entsprechenden Umformgesenk zu bewirken. Des Weiteren können, wie Figur 6 veranschaulicht, an den Seitenflächen 26, 28 ein oder mehrere Vertiefungen 33, 34, 35, 36 vorzugsweise in Form parallel zu den Kanten 19, 20 verlaufender Rinnen vorgesehen sein. Diese Rinnen gestatten die Erzeugung einer Materialverdrängung zur Ausbildung der wulstartigen Verdickungen 29, 30. Im Übrigen gilt die vorige Beschreibung entsprechend. Auch bei dieser Ausführungsform kann sich der Fuß 18, wie in Figur 6 dargestellt, in gerader Verlängerung des Körpers 3 oder gemäß Figur 4 zu diesem abgewinkelt erstrecken.

Ein Systemteil 1 für ein Stricksystem weist einen Körper 3 mit einem Fuß 18 auf, der von der Schmalseite 16 des Körpers 3 absteht. Der Fuß 18 ist dabei in einer ersten vorteilhaften Ausführungsform der Erfindung gegen den Körper 3 geneigt oder abgewinkelt. Eine entsprechende Biegelinie erstreckt sich in Längs- oder Bewegungsrichtung des Körpers 3. Der Winkel α ist somit in einer den Körper 3 quer schneidenden gedachten Ebene E definiert. Durch diese Maßnahme kann der Fuß 18 auch dann relativ präzise rechtwinklig zur Schlossbewegung eingestellt werden, wenn das Systemteil 1 und mit ihm der Körper 3 in einem entsprechenden Führungskanal 4 eines Betts 5 etwas kippt. Der Winkel α kompensiert diese Kippung. Es ergibt sich eine linienförmige Berührung zwischen dem Fuß 18 und der Führungsbahn 7, was verschleißmindernd wirkt. Ergänzend oder alternativ ist der Fuß 18 an seinen Kanten 19, 20 mit Verdickungen 29, 30 versehen, die ebenfalls verschleißmindernd wirken.

### Bezugszeichenliste:

- 1: Systemteil
- 2: Maschinenstricknadel
- 3: Körper
- 4: Führungskanal
- 5: Bett
- 6: Schloss
- 7: Führungsbahn
- 8, 9: Flanken
- 10: Boden
- 11: Pfeilpaar
- 12: Schaft
- 13: Haken
- 14, 15: Seitenflächen
- 16, 17: Schmalseiten
- 18: Fuß
- 19, 20: Kanten
- 21, 22: Anlageflächen
- 23: Pfeil
- 24, 25: Kanten
- 26: Seitenfläche
- 27: Biegelinie
- 28: Seitenfläche
- 29, 30: Verdickung
- 31, 32: Schnittlinien
- 33, 34, 35, 36: Vertiefungen
- 37: Kante
- 38: Stelle

- D, DV, DF: Dicke
- E: Ebene
- F: Gleitreibungskraft

## Patentansprüche

1. Stricksystem, mit einem Führungskanal (4)
mit einem Systemteil (1) mit einem Körper (3) zur Aufnahme im Führungskanal (4), wobei der Körper (3) flach ausgebildet ist sowie zwei Seitenflächen (14, 15) und zumindest eine Schmalseite (16, 17) aufweist, und
mit wenigstens einem Fuß (18) zum Antrieb des Systemteils (1) durch ein Schloss (6), wobei der Fuß (18) zumindest eine sich von der Schmalseite (16) des Körpers (3) weg erstreckende Kante (19, 20) aufweist, die mit zumindest einer der Seitenflächen (14, 15) einen stumpfen Winkel (α) einschließt,
**dadurch gekennzeichnet,**
**dass** der Winkel (α) zur Kompensation einer Kippung des Systemteils (1) eingerichtet ist, die sich während des Betriebs für das Systemteil (1) im Führungskanal (4) ergibt.

2. Stricksystem nach Anspruch 1, **dadurch gekennzeichnet, dass** der stumpfe Winkel (α) größer als 170° und kleiner als 180° ist.

3. Stricksystem nach Anspruch 1, **dadurch gekennzeichnet, dass** der Winkel (α) derart bemessen ist, dass die Kante (19, 20) des Fußes (18) in Betrieb rechtwinklig zu der Richtung (23) der Relativbewegung zwischen Schloss (6) und Bett (5) ausgerichtet ist.

4. Stricksystem nach Anspruch 1, **dadurch gekennzeichnet, dass** der Fuß (18) bei einer Biegelinie (27) gegen den Körper (3) abgewinkelt ist, die im Wesentlichen auf der Höhe der Schmalseite (16) angeordnet ist.

5. Stricksystem nach Anspruch 4, **dadurch gekennzeichnet, dass** die Biegelinie (27) parallel zu der Schmalseite (16) ausgerichtet ist.

6. Stricksystem nach Anspruch 1, **dadurch gekennzeichnet, dass** die Kante (19, 20) des Fußes (18) zu der Schmalseite (16) rechtwinklig orientiert ist.

7. Stricksystem nach Anspruch 1, **dadurch gekennzeichnet, dass** die Kante (19) an die Schmalseite (16) anschließt.

8. Stricksystem nach Anspruch 1, **dadurch gekennzeichnet, dass** der Fuß (18) nahtlos an den Körper (3) anschließend als einstückiger Bestandteil desselben ausgebildet ist und zumindest eine sich von der Schmalseite (16) des Körpers (3) weg erstreckende rippenartige Verdickung (29) aufweist.

9. Stricksystem nach Anspruch 8, **dadurch gekennzeichnet, dass** Die Verdickung (29, 30) eine Dicke (DV) aufweist, die in gleicher Richtung wie die Dicke (D) zu messen ist und die größer ist als die Dicke (D).

10. Stricksystem nach Anspruch 8, **dadurch gekennzeichnet, dass** die Verdickung (29, 30) eine in einem plastischen Umformvorgang an dem Fuß (18) ausgebildete Wulst ist.

11. Stricksystem nach Anspruch 8, **dadurch gekennzeichnet, dass** der Fuß (18) zwei zueinander im Wesentlichen parallele Seitenflächen (26, 28) aufweist und dass die Verdickung (29) wenigstens eine der Seitenflächen (26, 28) seitlich überragt.

12. Stricksystem nach Anspruch 8, **dadurch gekennzeichnet, dass** neben der Verdickung (29, 30) zumindest eine Vertiefung (33, 34, 35, 36) ausgebildet ist.

13. Stricksystem nach Anspruch 1 oder 8, **dadurch gekennzeichnet, dass** der Fuß (18) an seinen Kanten (19, 20) Anlageflächen (21, 22) aufweist, die dazu eingerichtet sind, mit einer Führungsbahn (7) eines Schlosses (6) in Anlage zu kommen, um das Systemteil (1) in seiner Längsrichtung anzutreiben.

14. Stricksystem nach Anspruch 13, **dadurch gekennzeichnet, dass** die Anlagefläche (21, 22) mit der Seitenfläche (14, 15) einen stumpfen Winkel (α) festlegt.

15. Stricksystem nach Anspruch 1 oder 8, **dadurch gekennzeichnet, dass** der Körper (3) unverwunden ist.

16. Stricksystem nach Anspruch 1 oder 8, **dadurch gekennzeichnet, dass** die Seitenflächen (14, 15) ebene Flächen sind.

17. Strick- oder Wirkmaschine
mit wenigstens einem einen Führungskanal (4) aufweisenden Bett (5), wobei die in den Führungskanal (4) eingesetzten Systemteile (1) jeweils einen Schaft (12) aufweisen, der wenigstens einen Fuß (18) trägt, der von Kanten (19, 20) begrenzt ist,
mit einem Strickschloss (6) welches zur Bewegung des Systemteils (1) eine Führungsbahn (7) aufweist, die während der Bewegung mit dem Fuß (18) des Systemteils (1) in Anlage ist,
wobei die Kante (19, 20) parallel zu der Führungsbahn (7) des Strickschlosses (6) angeordnet ist, so dass der Fuß (18) während der betriebsgemäßen Relativbewegung zwischen dem Bett (5) und dem Strickschloss (6) linienhaft an der Führungsbahn (7) anliegt
**dadurch gekennzeichnet, dass** die Führungsbahn (7) des Schlosses (6) zu der Kante (19, 20) des Fußes (18) des Systemteils (1) geneigt angeordnet ist, so dass die Führungsbahn (7) und die Kante (19, 20) parallel zueinander angeordnet sind und sich eine Linienanlage ergibt.

## Claims

1. Knitting system, with a guide channel (4),
with a system part (1) with a body (3) to be received in the guide channel (4), wherein the body is configured to be flat and also has two side faces (14, 15) and at least one narrow side (16, 17), and
with at least one butt (18) to drive the system part (1) by means of a cam (6), wherein the butt (18) has at least one edge (19, 20) that extends away from the narrow side (16) of the body (3) and encloses an obtuse angle (α) with at least one of the side faces (14, 15),
**characterised in that**
the angle (α) is arranged to compensate a tilt of the system part (1), which results for the system part (1) in the guide channel (4) during operation.

2. Knitting system according to claim 1, **characterised in that** the obtuse angle (α) is larger than 170° and smaller than 180°.

3. Knitting system according to claim 1, **characterised in that** the angle (α) is dimensioned in such a way that during operation the edge (19, 20) of the butt (18) is oriented at right angles to the direction (23) of the relative movement between the cam (6) and the bed (5).

4. Knitting system according to claim 1, **characterised in that** the butt (18) is angled off relative to the body (3) with a bending line (27) arranged substantially at the level of the narrow side (16).

5. Knitting system according to claim 4, **characterised in that** the bending line (27) is oriented parallel to the narrow side (16).

6. Knitting system according to claim 1, **characterised in that** the edge (19, 20) of the butt (18) is oriented at right angles to the narrow side (16).

7. Knitting system according to claim 1, **characterised in that** the edge (19) adjoins the narrow side (16).

8. Knitting system according to claim 1, **characterised in that** the butt (18) seamlessly adjoins the body (3) and is configured as an integral component thereof and has at least one rib-like thickened section (29) extending away from the narrow side (16) of the body (3).

9. Knitting system according to claim 8, **characterised in that** the thickened section (29, 30) has a thickness (DV), which is to be measured in the same direction as the thickness (D) and is larger than the thickness (D).

10. Knitting system according to claim 8, **characterised in that** the thickened section (29, 30) is a bead configured on the butt (18) in a plastic deformation process.

11. Knitting system according to claim 8, **characterised in that** the butt (18) has two substantially parallel side faces (26, 28) and that the thickened section (29) projects laterally above at least one of the side faces (26, 28).

12. Knitting system according to claim 8, **characterised in that** at least one depression (33, 34, 35, 36) is configured next to the thickened section (29, 30).

13. Knitting system according to claim 1 or 8, **characterised in that** the butt (18) has contact surfaces (21, 22) on its edges (19, 20), which are arranged to come in contact with a guide path (7) of a cam (6) in order to drive the system part (1) in its longitudinal direction.

14. Knitting system according to claim 13, **characterised in that** the contact surface (21, 22) defines an obtuse angle (α) with the side face (14, 15).

15. Knitting system according to claim 1 or 8, **characterised in that** the body (3) is untwisted.

16. Knitting system according to claim 1 or 8, **characterised in that** the side faces (14, 15) are plane surfaces.

17. Knitting or hosiery machine
with at least one bed (5) having a guide channel (4), wherein the system parts (1) inserted into the guide channel (4) respectively have a blade (12), which bears at least one butt (18) delimited by the edges (19, 20),
with a cam assembly (6), which has a guide path (7) for movement of the system part (1), which is in contact with the butt (18) of the system part (1) during movement, wherein the edge (19, 20) is arranged parallel to the guide path (7) of the cam assembly (6), so that the butt (18) is in linear contact with the guide path (7) during the operational relative movement between the bed (5) and the cam assembly (6), **characterised in that** the guide path (7) of the cam (6) is arranged on an inclination to the edge (19, 20) of the butt (18) of the system part (1) so that the guide path (7) and the edge (19, 20) are arranged parallel to one another and a linear contact results.

## Revendications

1. Dispositif de tricotage comportant un canal de guidage (4),
doté d'un élément (1) de dispositif comportant un corps (3) de réception dans le canal de guidage (4), le corps (3) ayant une conformation plate et présentant deux surfaces latérales (14, 15) et au moins un côté étroit (16, 17), et
comportant au moins un pied (18) destiné à l'entraînement de l'élément (1) de dispositif par l'intermédiaire d'un verrou (6), le pied (18) présentant au moins un bord (19, 20) qui s'étend à partir du côté étroit (16) du corps (3) et qui forme un angle obtus (α) avec au moins une des surfaces latérales (14, 15),
**caractérisé en ce que**
l'angle (α) est déterminé en vue de la compensation d'un basculement de l'élément (1) de dispositif qui se produit dans le canal de guidage (4) lors du fonctionnement de l'élément (1) de dispositif.

2. Dispositif de tricotage selon la revendication 1 **caractérisé en ce que** l'angle obtus (α) est supérieur à 170° et inférieur à 180°.

3. Dispositif de tricotage selon la revendication 1 **caractérisé en ce que** l'angle (α) est dimensionné de telle façon que le bord (19, 20) du pied (18) est orienté, lors du fonctionnement, à angle droit par rapport à la direction (23) du déplacement relatif entre le verrou (6) et le lit (5).

4. Dispositif de tricotage selon la revendication 1 **caractérisé en ce que** le pied (18) est incliné selon une ligne de pliure (27) contre le corps (3), laquelle est disposée essentiellement à la hauteur du côté étroit (16).

5. Dispositif de tricotage selon la revendication 4 **caractérisé en ce que** la ligne de pliure (27) est orientée parallèlement au côté étroit (16).

6. Dispositif de tricotage selon la revendication 1 **caractérisé en ce que** le bord (19, 20) du pied (18) est orienté à angle droit par rapport au côté étroit (16).

7. Dispositif de tricotage selon la revendication 1 **caractérisé en ce que** le bord (19) se raccorde au côté étroit (16).

8. Dispositif de tricotage selon la revendication 1 **caractérisé en ce que** le pied (18) est conformé en se raccordant sans soudure au corps (3) en formant une seule pièce avec celui-ci, et **en ce qu'**il présente au moins un épaississement (29) du genre ride s'étendant à partir du côté étroit (16) du corps (3).

9. Dispositif de tricotage selon la revendication 8 **caractérisé en ce que** l'épaississement (29, 30) présente une épaisseur (DV) qui doit être mesurée dans la même direction que l'épaisseur (D) et qui est supérieure à l'épaisseur (D).

10. Dispositif de tricotage selon la revendication 8 **caractérisé en ce que** l'épaississement (29, 30) présente un renflement réalisé sur le pied (18) selon un procédé de déformation plastique.

11. Dispositif de tricotage selon la revendication 8 **caractérisé en ce que** le pied (18) présente deux surfaces latérales (26, 28) sensiblement parallèles l'une à l'autre et **en ce que** l'épaississement (29) dépasse latéralement d'au moins une des surfaces latérales (26, 28).

12. Dispositif de tricotage selon la revendication 8 **caractérisé en ce qu'**à côté de l'épaississement (29, 30) est réalisé au moins un creux (33, 34, 35, 36).

13. Dispositif de tricotage selon la revendication 1 ou 8 **caractérisé en ce que** le pied (18) présente sur ses bords (19, 20) des surfaces d'appui (21, 22) qui sont disposées de façon à venir en appui contre une piste de guidage (7) d'un verrou (6) en vue d'entraîner l'élément (1) de dispositif dans sa direction longitudinale.

14. Dispositif de tricotage selon la revendication 13 **caractérisé en ce que** la surface d'appui (21, 22) détermine un angle obtus (α) avec la surface latérale (14, 15).

15. Dispositif de tricotage selon la revendication 1 ou 8 **caractérisé en ce que** le corps (3) n'est pas gauchi.

16. Dispositif de tricotage selon la revendication 1 ou 8 **caractérisé en ce que** les surfaces latérales (14, 15) sont des surfaces planes.

17. Machine à tricoter ou de bonneterie
comportant au moins un lit (5) présentant un canal de guidage (4), les éléments (1) de dispositif mis en place dans le canal de guidage (4) présentant chacun un fût (12) qui porte au moins un pied (18), lequel est délimité par des bords (19, 20),
comportant un verrou de tricotage (6) qui présente une piste de guidage (7) qui est destinée au déplacement de l'élément (1) de dispositif, laquelle, lors du déplacement, est en appui contre le pied (18) de l'élément (1) de dispositif,
le bord (19, 20) étant disposé parallèlement à la piste de guidage (7) du verrou de tricotage (6) de telle manière que le pied (18) est en appui linéaire contre la piste de guidage (7) pendant le déplacement relatif fonctionnel entre le lit (5) et le verrou de tricotage (6),
**caractérisé en ce que** la piste de guidage (7) du verrou (6) est disposée de manière inclinée par rapport au bord (19, 20) du pied (18) de l'élément (1) de dispositif de telle manière que la piste de guidage (7) et le bord (19, 20) sont disposés parallèlement l'un à l'autre et qu'il s'ensuit un appui linéaire.
